# FASCICULE DE BREVET EUROPEEN

(11) **EP 3 224 423 B1**
(45) Date de publication et mention de la délivrance du brevet: **17.04.2019**
(21) Numéro de dépôt: 15808760.1
(22) Date de dépôt: 27.11.2015
(51) Int. Cl.: E04B 1/76, E04B 1/80

(54) **KIT ET SYSTEME D'ISOLATION THERMIQUE ET PROCEDE POUR SON INSTALLATION**
WÄRMEISOLIERSYSTEM UND KIT SOWIE INSTALLATIONSVERFAHREN DAFÜR
THERMAL INSULATION SYSTEM AND KIT AND METHOD FOR INSTALLING SAME

(30) Priorité: 28.11.2014 FR 1461675
(43) Date de publication de la demande: 04.10.2017
(73) Titulaire: Saint-Gobain Isover, 92400 Courbevoie (FR)
(72) Inventeur: MORCRETTE, Alice, 80000 Amiens (FR)
(74) Mandataire: Saint-Gobain Recherche
(86) Numéro de dépôt international: PCT/FR2015/053248
(87) Numéro de publication internationale: WO 2016/083760

(56) Documents cités:
- EP-A1- 2 468 971
- EP-A2- 0 114 687
- EP-A2- 1 496 167
- WO-A1-2013/086005
- CH-A5- 687 932
- DE-U1-202004 004 187
- FR-A- 1 250 228
- GB-A- 2 477 401

## Description

Le présent exposé concerne les systèmes d'isolation thermique mis en oeuvre dans le domaine du bâtiment pour le doublage de parois. Le présent exposé concerne plus particulièrement des systèmes de doublage d'une paroi d'un bâtiment à l'aide de panneaux isolants élémentaires assemblés pour couvrir au moins en partie la paroi, et elle concerne en particulier des panneaux de type PIV (pour Panneau Isolant sous Vide). Le présent exposé concerne encore un kit de montage et de fixation d'éléments de doublage d'une paroi d'un bâtiment et un procédé d'isolation d'une paroi, soit par l'intérieur soit par l'extérieur.

### Etat de la technique antérieure

Les panneaux de type PIV sont constitués de façon connue : d'une enveloppe membranaire qui assure l'étanchéité aux gaz et d'un panneau rigide en un matériau poreux ayant des propriétés isolantes, placé à l'intérieur de cette enveloppe et maintenu sous vide au moyen de cette enveloppe. Le panneau poreux, qui est le plus souvent en un matériau tel que de la silice fumée, un aérogel, de la perlite, des fibres de verre, donne sa forme au panneau et lui confère sa résistance mécanique.

De tels panneaux sont utiles pour l'isolation thermique d'une paroi en raison de leurs performances isolantes élevées pour une épaisseur et un encombrement réduits.

Au moment de la fabrication des panneaux de type PIV, les gaz sont évacués du matériau poreux isolant avant que ce dernier soit conditionné sous vide dans une enveloppe barrière souple. Celle-ci est généralement constituée d'un film thermosoudable qui peut comporter plusieurs couches de matériaux distincts et elle est conçue pour éviter la formation de ponts thermiques au niveau des tranches.

Compte-tenu de leurs caractéristiques de conception, les panneaux PIV ne peuvent pas être découpés, ils ne peuvent pas non plus être perforés ou percés en vue de leur assemblage sur une paroi, faute de quoi, le vide serait détruit.

Leur manipulation est délicate car l'enveloppe barrière est fragile. Toute dégradation de l'enveloppe barrière par application de contraintes mécaniques ou par des traitements chimiques entraine une perte de performance de l'ensemble isolant.

Par ailleurs, il est souhaitable que l'assemblage des panneaux soit réalisé de façon jointive de façon à éviter la formation de ponts thermiques et à éviter la circulation d'air autour de l'assemblage.

On connaît de l'art antérieur différents systèmes de fixation mécanique de panneaux isolants: par exemple DE 20 2004 004 187 U1, FR2849461, US2006/0265988, WO2014/128378 décrivent des systèmes d'assemblage de panneaux de type PIV sur une paroi au moyen de profilés rigides (en métal ou en plastique rigide) dans lesquels les panneaux viennent s'insérer et sont retenus.

Toutefois, la manipulation des PIV sur un chantier et leur solidarisation au moyen de structures rigides de type profilés présente des risques de perforation ou d'endommagement de ces panneaux. En outre, l'architecture des structures de fixation des PIV divulguées dans ces documents est très complexe, donc coûteuse et nécessite un temps important pour réaliser la pose et l'assemblage des panneaux.

Il subsiste donc le besoin d'un système permettant l'assemblage et la fixation de panneaux isolants sur une paroi qui soit à la fois simple à mettre en oeuvre, peu coûteux, qui ne présente pas ou peu de risque de dégradation des panneaux, en particulier des PIV, et qui permette de palier les inconvénients précités des solutions antérieures.

### Résumé de l'invention

Un objet de l'invention est un panneau isolant enveloppé comprenant
- un panneau isolant sous vide ayant une forme de plaque rectangulaire comprenant un matériau poreux résistant à la compression et une enveloppe barrière qui renferme de manière étanche aux gaz le matériau poreux, et
- au moins une bande de fixation présentant une largeur et une longueur, la longueur étant supérieure au périmètre du panneau isolant sous vide, chaque bande de fixation formant une enveloppe autour d'au moins une partie de quatre faces successives du panneau isolant sous vide et comportant deux extrémités libres qui peuvent être assemblées de manière à former un pan d'accrochage, la ou chaque bande de fixation étant assemblée solidairement sur le panneau isolant sous vide.

Selon un exemple de réalisation, le panneau isolant enveloppé comporte en outre des moyens de fixation permettant la fixation mécanique du pan d'accrochage à une paroi. Ces moyens de fixation comprennent par exemple des perforations dans le pan d'accrochage.

Selon un exemple de réalisation, la bande de fixation peut constituer l'enveloppe barrière et renfermer de manière étanche aux gaz le matériau poreux.

Dans ce cas, la bande de fixation forme une enveloppe autour des six faces du panneau isolant sous vide.

Selon un autre exemple de réalisation au contraire, la bande de fixation peut entourer l'enveloppe barrière du panneau isolant sous vide.

Selon un exemple, la bande de fixation est en fibres de verre ou à base de fibres de verre.

Selon un exemple, la bande de fixation est fixée au panneau isolant sous vide par collage ou par thermosoudage.

Selon un exemple, la largeur de la bande de fixation est sensiblement égale à la largeur du panneau isolant sous vide.

Selon un exemple, le panneau isolant enveloppé comprend au moins deux bandes de fixation ayant chacune une largeur inférieure à la largeur du panneau isolant sous vide.

Selon un exemple, le panneau isolant enveloppé comprend en outre une plaque de doublage, notamment une plaque de mousse compressible, enveloppée également par la bande de fixation.

La bande de fixation peut être composée d'un film de tout matériau ou combinaison de matériaux approprié(e), notamment un matériau tissé ou non tissé, un polymère, par exemple du polypropylène, etc. Le film peut aussi être composé de plusieurs couches de matériaux distincts.

Un autre objet de l'invention est un kit de montage et éventuellement fixation d'un panneau isolant enveloppé tel que défini précédemment, comprenant
- un panneau isolant sous vide ayant une forme de plaque rectangulaire comprenant un matériau poreux résistant à la compression et une enveloppe barrière qui renferme de manière étanche aux gaz le matériau poreux, et
- au moins une bande de fixation présentant une largeur et une longueur, la longueur étant supérieure au périmètre du panneau isolant sous vide, chaque bande de fixation étant adaptée pour former une enveloppe autour d'au moins une partie de quatre faces successives du panneau isolant sous vide tout en conservant deux extrémités libres pouvant être assemblées de manière à former un pan d'accrochage.

Selon un exemple de réalisation, le kit comporte en outre des moyens permettant l'assemblage solidaire de la bande de fixation sur le panneau isolant sous vide, pour former un panneau isolant enveloppé. Ces moyens comprennent par exemple de la colle ou une bande auto-agrippante.

Selon un exemple, le kit comporte en outre des moyens de fixation permettant la fixation mécanique du pan d'accrochage à une paroi, notamment mais non limitativement au moins un crochet, un clou, une vis, une agrafe, un rivet, ou de la colle.

Selon un exemple, le kit comporte en outre au moins une plaque de doublage, notamment une plaque de mousse compressible.

Cette plaque de doublage peut être destinée à être enveloppée également par la bande de fixation, ou elle peut être destinée à être positionnée contre la ou les face(s) interne(s) d'un ou plusieurs panneaux isolants enveloppés de façon à éloigner lesdits panneaux de la paroi sur laquelle ils sont fixés.

Un autre objet de l'invention est un système de doublage d'une paroi d'un bâtiment comprenant une pluralité de panneaux isolants enveloppés tel que définis ci-dessus, dans lequel
les panneaux isolants enveloppés sont répartis en au moins une couche de panneaux formant des rangées,
chaque panneau isolant enveloppé comporte une face interne tournée vers la paroi et une face externe opposée à la face interne,
le pan d'accrochage de chaque panneau isolant enveloppé est fixé à la paroi à l'aide de moyens mécaniques de fixation, et
les panneaux sont disposés de telle sorte que chaque panneau d'une rangée supérieure recouvre le pan d'accrochage du panneau qui lui est immédiatement inférieur, la face inférieure du panneau supérieur étant assemblée de façon jointive avec la face supérieure du panneau inférieur.

Un autre objet de l'invention est un procédé de doublage d'une paroi d'un bâtiment avec des panneaux isolants enveloppés tels que définis précédemment, notamment pour réaliser un système de doublage tel que défini ci-dessus, ce procédé comportant les étapes suivantes :
- fixation du pan d'accrochage d'un premier panneau isolant enveloppé sur la paroi à l'aide d'un moyen de fixation mécanique,
- fixation des pans d'accrochage des autres panneaux de façon à former un assemblage jointif de panneaux isolants, chaque panneau étant disposé de façon à recouvrir le pan de fixation du panneau qui lui est immédiatement inférieur.

Selon un exemple de mise en oeuvre, le procédé selon l'invention comporte en outre les étapes préalables suivantes :
- assemblage sur chaque panneau isolant sous vide d'au moins une bande de fixation de longueur supérieure au périmètre du panneau isolant sous vide, de manière à ce que ladite bande de fixation forme une enveloppe autour d'au moins une partie de quatre faces successives du panneau isolant sous vide, de façon à conserver deux extrémités libres en extrémité de la bande, et
- assemblage des extrémités de la bande pour former un pan d'accrochage de façon à former un panneau isolant enveloppé.

Selon un exemple de mise en oeuvre, chaque panneau isolant enveloppé comporte une face interne tournée vers la paroi et une face externe opposée à la face interne, et les faces internes des panneaux isolants enveloppés sont éloignées de la paroi et disposées de façon sensiblement verticale par l'intermédiaire d'une couche de colle et/ou au moyen de cale(s) ou d'une plaque de mousse compressible.

Selon un exemple de mise en oeuvre, le procédé comprend en outre l'application d'une couche de mortier sur les faces externes des panneaux isolants enveloppés assemblés.

Dans ce cas, il est particulièrement avantageux que la bande de fixation soit réalisée dans un matériau résistant aux mortiers tel qu'un tissu de fibre de verre.

Le système d'isolation selon l'invention présente de nombreux avantages : il permet de mettre en oeuvre des panneaux PIV qui ont une faible épaisseur et offrent une très bonne isolation. La méthode d'assemblage et de fixation évite l'emploi de pièces susceptibles de former des ponts thermiques. Elle est facile à mettre en oeuvre et peu coûteuse. Cette méthode d'assemblage et de fixation réduit les risques de dégradation des panneaux PIV au cours de leur installation sur une paroi. Cette méthode peut également être mise en oeuvre pour d'autres types de panneaux d'isolation.

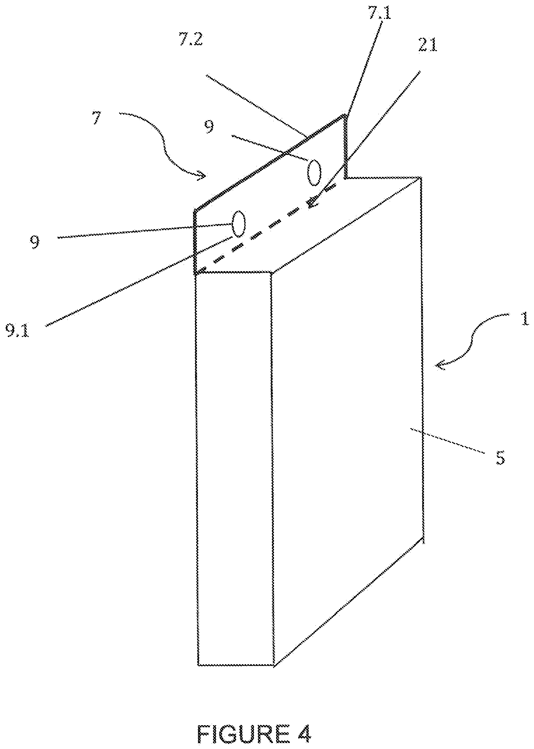

Ce système est extrêmement souple dans ses modes de mise en oeuvre : la solidarisation des enveloppes de fixation sur les panneaux isolants, en particulier les PIV peut être faite en usine, au moment de la fabrication. C'est le cas pour la variante illustrée sur la figure 4. Pour les systèmes dans lesquels l'enveloppe n'est pas thermosoudée autour du panneau isolant, mais collée ou attachée par un autre moyen tel qu'une bande autoagrippante, l'assemblage de l'enveloppe autour des panneaux peut être réalisé en usine ou sur le chantier.

Le présent exposé concerne également un kit de montage et de fixation d'éléments de doublage d'une paroi d'un bâtiment comprenant :
- au moins un panneau isolant ayant une forme de plaque rectangulaire, ce kit étant caractérisé en ce qu'il comprend en outre :
- au moins une bande de fixation composée d'un film de matériau d'une longueur supérieure au périmètre d'un panneau, chaque bande de fixation formant une enveloppe autour d'au moins une partie de quatre faces successives du panneau isolant et comportant deux extrémités libres qui peuvent être assemblées pour former un pan d'accrochage,
- des moyens permettant l'assemblage solidaire des bandes de fixation sur les panneaux isolants, pour former des panneaux isolants enveloppés.

Le présent exposé concerne également un système de doublage d'une paroi d'un bâtiment comprenant :
- des panneaux isolants ayant une forme de plaque rectangulaire, les panneaux étant répartis en au moins une couche de panneaux formant des rangées, ce système étant caractérisé en ce qu'il comprend en outre :
- des bandes de fixation composées d'un film de matériau d'une longueur supérieure au périmètre des plaques, chaque bande de fixation formant une enveloppe autour d'au moins une partie de quatre faces successives d'un panneau isolant et comportant deux extrémités libres assemblées formant un pan d'accrochage,
les bandes de fixation étant assemblées sur les panneaux isolants de façon solidaire de ces panneaux pour former des panneaux isolants enveloppés, chaque panneau isolant enveloppé comportant une face interne tournée vers la paroi et une face externe opposée à la face interne,
le pan d'accrochage de chaque panneau isolant enveloppé étant fixé à la paroi à l'aide de moyens mécaniques de fixation,
les panneaux étant disposés de telle sorte que chaque panneau d'une rangée supérieure recouvre le pan d'accrochage du panneau qui lui est immédiatement inférieur, la face inférieure du panneau supérieur étant assemblée de façon jointive avec la face supérieure du panneau inférieur,

les panneaux isolants enveloppés étant disposés de façon sensiblement verticale.

Le présent exposé concerne encore un procédé de doublage d'une paroi d'un bâtiment comprenant la fourniture de panneaux isolants, ce procédé étant caractérisé en ce qu'il comporte les étapes suivantes :
- assemblage sur chaque panneau isolant d'au moins une bande de fixation composée d'un film de matériau d'une longueur supérieure au périmètre du panneau, sur au moins une partie de quatre faces successives de chaque panneau isolant, de façon à laisser deux extrémités libres en extrémité du film,
- assemblage des extrémités du film pour former un pan d'accrochage de façon à former un panneau isolant enveloppé,
- fixation du pan d'accrochage d'un premier panneau isolant enveloppé 1 sur la paroi à l'aide d'un moyen de fixation mécanique,
- fixation des pans d'accrochage des autres panneaux de façon à former un assemblage jointif de panneaux isolants, chaque panneau étant disposé de façon à recouvrir le pan de fixation du panneau qui lui est immédiatement inférieur.

Selon des modes de mise en oeuvre préférés, le présent exposé concerne également les éléments suivants (notamment compatibles avec le panneau isolant enveloppé, le kit, le système et le procédé selon l'invention, définis précédemment) :
Un kit d'un type défini ci-dessus comportant en outre des moyens permettant la fixation mécanique du pan d'accrochage à la paroi.

Un kit, un système et un procédé de doublage d'un type défini ci-dessus dans lequel les panneaux isolants sont sous forme de plaques rectangulaires comprenant un matériau poreux résistant à la compression et une enveloppe barrière qui renferme le matériau poreux, l'enveloppe barrière étant étanche aux gaz et permettant de maintenir un vide intérieur.

Un kit, un système et un procédé de doublage d'un type défini ci-dessus dans lequel la bande de fixation forme une enveloppe autour des six faces de la plaque.

Un kit, un système et un procédé de doublage d'un type défini ci-dessus dans lequel la bande de fixation est en ou à base de tissu de fibre de verre.

Un kit, un système et un procédé de doublage d'un type défini ci-dessus dans lequel les bandes de fixation sont fixées aux panneaux isolants par collage, ou thermosoudage.

Un kit, un système et un procédé de doublage d'un type défini ci-dessus dans lequel les bandes de fixation sont fixées aux panneaux isolants et à la paroi par une accroche.

Un kit, un système et un procédé de doublage d'un type défini ci-dessus dans lequel les pans d'accrochage comportent des perforations permettant leur fixation sur la paroi.

Un kit d'un type défini ci-dessus dans lequel les bandes de fixation sont assemblées de façon solidaire sur les panneaux isolants pour former des panneaux isolants enveloppés. On entend alors par kit, un ensemble de panneaux isolants ainsi enveloppés prêts à l'emploi pour le doublage.

Un kit, un système et un procédé de doublage d'un type défini ci-dessus dans lequel la bande de fixation est d'une largeur (*l*) sensiblement égale à la largeur (L) du panneau isolant.

Un kit, un système et un procédé de doublage d'un type défini ci-dessus dans lequel les faces latérales des panneaux isolants enveloppés sont recouvertes d'une bande de renforcement.

Un kit, un système et un procédé de doublage d'un type défini ci-dessus dans lequel la bande de fixation est d'une largeur (*l*) inférieure à la largeur (L) du panneau isolant.

Un kit, un système et un procédé de doublage d'un type défini ci-dessus dans lequel chaque panneau est associé à au moins deux bandes de fixation.

Un kit, un système et un procédé de doublage d'un type défini ci-dessus qui comporte en outre au moins une cale d'une dimension permettant de fixer le panneau de façon sensiblement parallèle à la paroi, la ou les cales étant sous forme ponctuelle, de latte ou de plaque, apte à procurer un appui localisé, linéaire ou surfacique contre le panneau.

Un kit, un système et un procédé de doublage d'un type défini ci-dessus qui comporte en outre une plaque de mousse compressible.

Un kit, un système et un procédé de doublage d'un type défini ci-dessus dans lequel le panneau isolant enveloppé comporte un décrochement dans la partie inférieure d'une face.

Un système et un procédé de doublage d'un type défini ci-dessus dans lequel les moyens mécaniques de fixation assurent à la fois la fixation à la paroi et la solidarisation de la ou chaque bande de fixation sur un panneau isolant.

Un système et un procédé de doublage d'un type défini ci-dessus dans lequel les faces internes du panneau isolant enveloppé sont collées sur la paroi.

Un système et un procédé de doublage d'un type défini ci-dessus dans lequel les faces internes des panneaux isolants enveloppés sont éloignées de la paroi et disposées de façon sensiblement verticale par l'intermédiaire d'une couche de colle et/ou au moyen de cale(s) ou d'une plaque de mousse compressible.

Un système et un procédé de doublage d'un type défini ci-dessus dans lequel les faces latérales de deux panneaux successifs d'une même rangée sont assemblées de façon jointive.

Un système qui comporte en outre un parement externe.

Un procédé de doublage d'un type défini ci-dessus qui comporte en outre la mise en oeuvre d'un parement externe.

Un système et un procédé de doublage d'un type défini ci-dessus dans lequel la face externe de chaque panneau isolant enveloppé est en fibre de verre.

Un système de doublage d'un type défini ci-dessus qui comporte en outre un parement externe dans lequel le parement comporte une couche de mortier appliquée sur les faces externes des panneaux isolants enveloppés assemblés.

Un procédé de doublage d'un type défini ci-dessus qui comporte en outre la mise en oeuvre d'un parement externe dans lequel le parement comporte une couche de mortier appliquée sur les faces externes des panneaux isolants enveloppés assemblés.

Un système et un procédé de doublage d'un type défini ci-dessus dans lequel le parement est un doublage autoportant.

Un système de doublage qui comporte en outre des plaques de mousse compressible sur la face interne des panneaux isolants.

Un procédé de doublage d'un type défini ci-dessus qui comporte en outre la mise en oeuvre de plaques de mousse compressible sur la face interne des panneaux isolants.

Un système de doublage qui comporte en outre des plaques de mousse compressible entre la face interne des panneaux isolants enveloppés et la paroi.

Un procédé de doublage d'un type défini ci-dessus qui comporte en outre la mise en oeuvre de plaques de mousse compressible entre la face interne des panneaux isolants enveloppés et la paroi.

Un système et un procédé de doublage d'un type défini ci-dessus dans lequel les panneaux isolants enveloppés comportent des cavités permettant le logement des moyens mécaniques de fixation.

Un procédé d'un type défini ci-dessus dans lequel les panneaux isolants enveloppés sont disposés par rangées (R₁, R₂), le procédé comprenant la fixation de chaque rangée (R₁) inférieure avant la fixation de la rangée qui lui est immédiatement supérieure (R₂).

Un procédé d'un type défini ci-dessus dans lequel la paroi est un mur comportant une face supérieure, la dernière rangée de panneaux étant accrochée à la paroi par fixation du pan d'accrochage sur la face supérieure du mur.

### Figures :

Figure 1 : Vue schématique en perspective d'un panneau isolant 3 enveloppé dans une bande de fixation 5
Figure 2 : Vue schématique en perspective d'un panneau isolant 3 enveloppé au moyen de deux bandes de fixation 5 avant collage des bandes 5 sur le panneau 3
Figure 3 : Vue schématique en perspective d'un panneau isolant enveloppé 1 dans une bande de fixation 5 et dont les faces latérales 3.1 sont recouvertes d'une bande de renforcement 11
Figure 4 : Vue schématique en perspective d'un panneau isolant enveloppé 1 dont l'enveloppe barrière souple forme la bande de fixation 5
Figure 5 : Vue en coupe de la fixation d'un panneau isolant enveloppé 1 sur une paroi 15 avec des moyens mécaniques 13.1 et un collage sur la paroi 15
Figure 6 : Vue en coupe de la fixation d'un panneau isolant enveloppé 1 sur une paroi 15 avec un plot d'espacement 19
Figure 7 : Vue en coupe de la fixation de panneaux isolants enveloppés 1A, 1B au sommet 15.1 d'un mur 15
Figure 8 : Vue en perspective d'un ensemble de panneaux isolants enveloppés 1 en cours de montage sur une paroi 15
Figure 9 : Vue en coupe de la fixation de panneaux isolants enveloppés 1A, 1B sur une paroi 15, le panneau isolant enveloppé comprenant un doublage interne par une couche de mousse 21.1
Figure 10 : Vue en coupe de la fixation de panneaux isolants enveloppés 1A, 1B sur une paroi 15, un doublage externe par une couche de mousse 21.2 étant placé entre le panneau isolant enveloppé et la paroi
Figures 11A et 11B : Vue schématique en coupe d'un procédé d'assemblage et de solidarisation d'une bande de fixation 5 sur un panneau 3
Figure 12 : Vue en coupe d'un mode de fixation d'un panneau isolant enveloppé 1 sur une paroi 15
Figure 13 : Vue en coupe de la fixation sur une paroi 15 de panneaux isolants enveloppés 1A, 1B comportant un logement 1.11 dans lequel le moyen de fixation 13.3 trouve sa place

De façon à faciliter la lecture, dans les différentes figures, on a utilisé la même numérotation pour désigner une même pièce.

### Description détaillée:

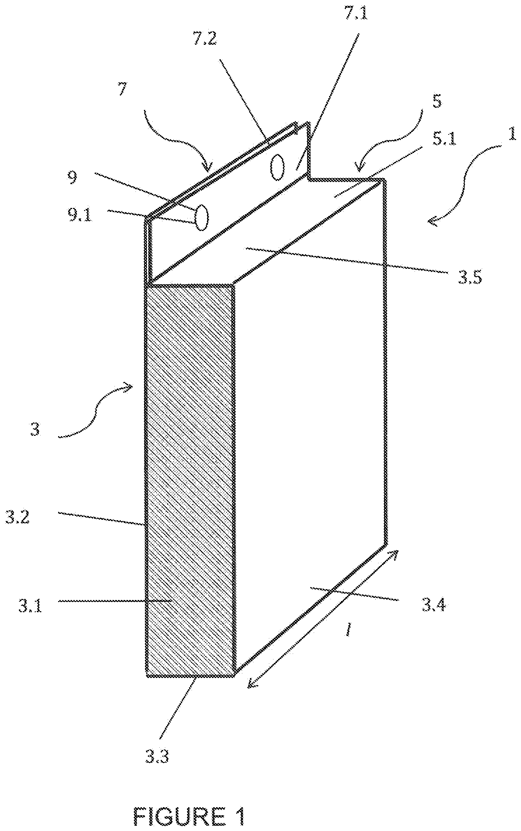

Sur la figure 1 est représenté schématiquement un kit de montage et de fixation d'éléments de doublage 3 d'une paroi d'un bâtiment. Ce kit comprend des panneaux isolants 3 ayant une forme de plaque rectangulaire ou carrée, comportant deux faces minces latérales 3.1 (dont le périmètre définit le périmètre du panneau au sens de la présente description), deux faces latérales larges : une face arrière 3.2 et une face avant 3.4, une face mince inférieure 3.3 et une face mince supérieure 3.5. La plaque rectangulaire est enveloppée sur les deux faces latérales larges 3 .2 et 3.4 et sur ses faces inférieure 3.3 et supérieure 3.5 par une bande 5.1 d'un matériau sous forme de film. La bande de matériau 5.1 est d'une largeur / identique à la largeur du panneau 3. Le panneau 3 et la bande 5.1 sont placés de telle façon que la bande 5.1 recouvre les faces 3.2, 3.3, 3.4 et 3.5 sans en déborder. La bande de matériau 5.1 est collée sur les quatre faces 3 .2, 3.3, 3.4 et 3.5 du panneau isolant 3 de façon à former une enveloppe 5 solidaire du panneau 3 qui se termine en chacune de ses extrémités par un pan 7.1 et 7.2. Le collage peut être réalisé sur la totalité de la bande de fixation 5 ou sur une partie seulement. Les pans 7.1 et 7.2 sont assemblés et collés entre eux à la verticale de la face arrière 3.2 pour former un pan d'accrochage 7. Sur la figure 1, les pans 7.1 et 7.2 sont représentés avec la même longueur, mais dans certains cas, un pan peut être plus long que l'autre sans que cela empêche l'assemblage et la formation d'un pan d'accrochage 7. La bande de matériau 5.1 peut être fournie séparément des panneaux isolants 3, elle peut être fournie prête à coller, par exemple sous forme de bande autocollante recouverte d'un film de protection qui est retiré avant collage. De façon alternative, des panneaux enveloppés 1 peuvent être préfabriqués et directement fournis sur un chantier comme panneaux isolants prêts à l'emploi.

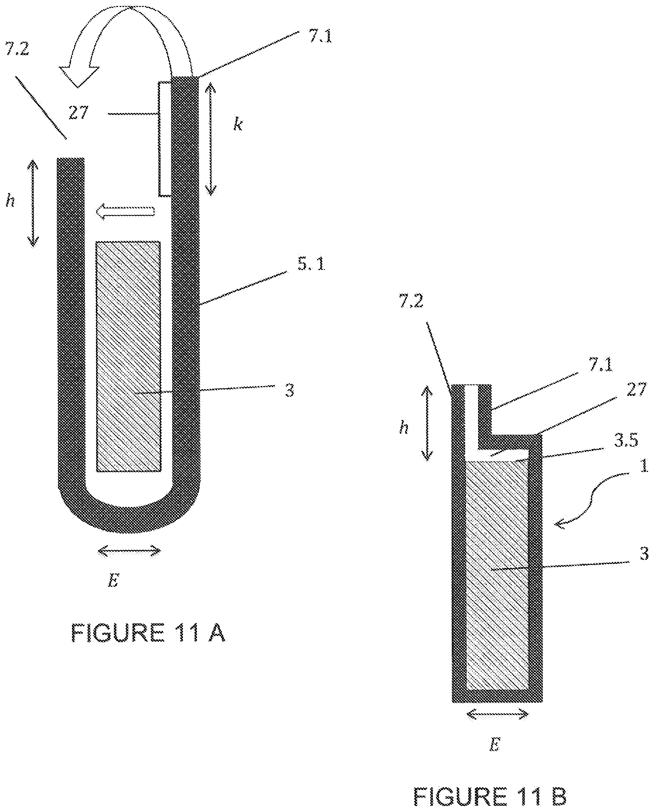

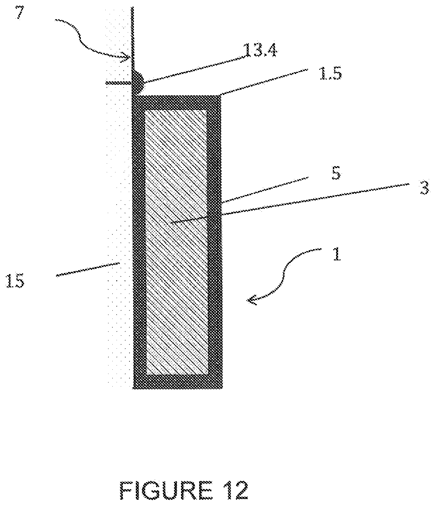

Selon une autre variante, la bande de matériau 5.1 peut être fixée sur les quatre faces 3 .2, 3.3, 3.4 et 3.5 du panneau isolant 3 par tout autre moyen approprié tel que par exemple thermosoudage, fixation par des bandes autoaggripantes. Les figures 11A, 11B et 12 représentent des modes alternatifs de solidarisation de la bande de matériau 5.1 avec les panneaux 3.

Le matériau dont est composé le film 5.1 est d'une résistance mécanique suffisante pour que l'enveloppe 5 supporte le poids du panneau 3. Par exemple, pour pouvoir maintenir des panneaux d'environ 5 kg, de 20 mm d'épaisseur, d'une densité de 250kg/m³, avec deux points de fixation sans les arracher, il est préférable que le tissu présente une résistance à la traction d'au moins 10N, et préférentiellement d'au moins 20N sur chacune des fixations. Pour un panneau du même matériau mais d'épaisseur 10 mm, on utilise avantageusement un tissu qui présente une résistance à la déchirure d'au moins 5 N, ou encore mieux au moins 10N. L'homme du métier sait adapter le choix du tissu en fonction du poids des panneaux et du nombre de points de fixation par des tests simples de résistance à la déchirure. Le film 5.1 peut être composé de tout matériau tissé ou non tissé présentant une résistance mécanique suffisante. Avantageusement, le panneau isolant 3 est un PIV comprenant un matériau poreux résistant à la compression et une enveloppe barrière qui renferme le matériau poreux. L'enveloppe barrière est étanche aux gaz et permettant de maintenir un vide intérieur. De façon alternative, le panneau isolant 3 peut être en tout matériau isolant connu tel que laine de roche, laine de verre.

Avantageusement, l'enveloppe 5 est en tissu de fibre de verre. En particulier, certaines qualités de fibres de verre qui sont connues pour être compatibles avec une composition de mortier sont avantageuses dans cette application.

D'une manière générale un panneau 3 de type PIV présente une épaisseur allant d'environ 10 à 50 mm. L'enveloppe 5 est préférentiellement d'une épaisseur de l'ordre du mm, par exemple 0,5 à 2 mm.

Lorsque le kit est mis en oeuvre pour la construction d'une isolation d'un mur extérieur et que l'isolation est recouverte d'une couche de mortier, on choisit de préférence pour l'enveloppe 5 un matériau résistant aux mortiers tel qu'un tissu de fibre de verre.

Lorsque le kit est mis en oeuvre pour la construction de l'isolation d'un mur intérieur, avec par exemple une doublure par une paroi autoportante, l'enveloppe 5 peut être en un autre matériau dès lors que celui-ci présente la résistance mécanique suffisante pour supporter le poids des panneaux PIV. Comme exemple de matériau résistant mécaniquement, on peut citer notamment un film de polypropylène renforcé, .....

Lorsque le kit est mis en oeuvre pour la construction de l'isolation d'un mur au moyen de panneaux isolants respirants tels que des panneaux de laine de verre ou de laine de roche, on choisit avantageusement un matériau respirant pour l'enveloppe 5.

Des oeillets 9.1 entourent deux orifices 9 percés dans le pan d'accrochage 7 et permettent la fixation mécanique du panneau 3 au travers du pan d'accrochage 7 à une paroi (non représentée sur cette figure). La présence d'oeillets 9.1 permet de renforcer la résistance au déchirement du pan de fixation 7. D'autres moyens de renforcer la bordure des orifices peuvent être utilisés, comme le thermosoudage sous pression. La fixation des panneaux 3 au travers du pan d'accrochage 7 permet d'éviter tout risque d'endommagement des panneaux 3 au moment de leur accrochage sur la paroi.

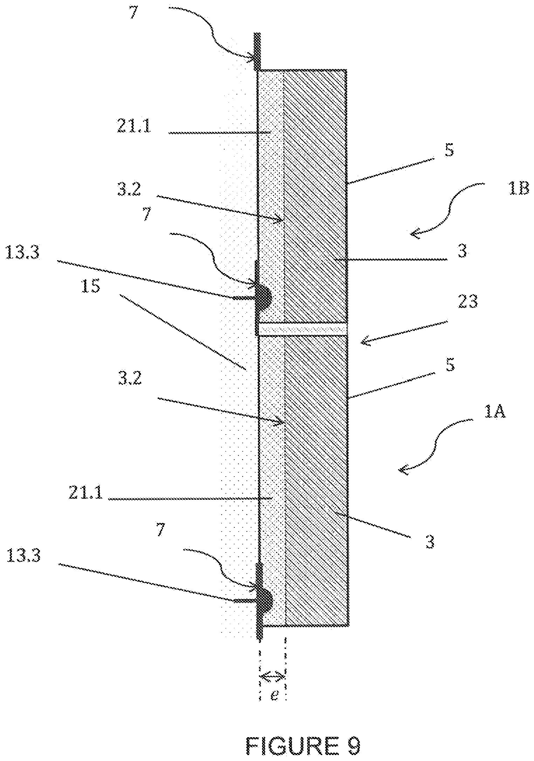

Selon une variante, on peut prévoir de percer directement le pan d'accrochage 7 sur le chantier, sans réaliser préalablement d'orifices tels que ceux représentés sur la figure 9. C'est le cas par exemple lorsque l'on cloue ou que l'on agrafe le pan d'accrochage 7 sur une paroi.

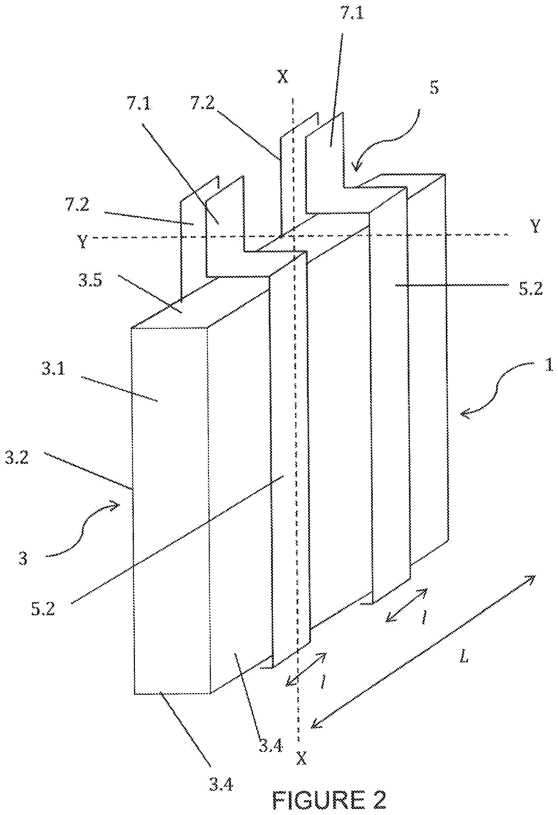

Sur la figure 2 est représenté schématiquement un kit de montage et de fixation d'éléments 3 de doublage d'une paroi d'un bâtiment comportant : un panneau isolant 3 et des bandes de fixation 5, qui sont positionnés pour être assemblés mais ne sont pas encore collés. Ce kit 1 diffère de celui représenté sur la figure 1 en ce que le panneau isolant 3 est enveloppé par deux bandes 5.2 d'une largeur / inférieure à la largeur L de ses faces latérales larges 3 .2 et 3.4.

Les deux bandes 5.2 sont placées de façon symétrique par rapport au plan vertical médian (X-X, Y-Y) du panneau 3 de sorte que le poids du panneau 3 est réparti de façon équilibrée sur les deux bandes 5.2. On peut prévoir, en fonction de la largeur du panneau 3, de mettre en oeuvre un nombre de bandes 5.2 supérieur à deux. On peut prévoir un repérage dessiné sur les panneaux isolants 3 permettant de faciliter le positionnement des bandes de fixation 5

La fixation du panneau 3 sur une paroi (non représentée) se fait au moyen d'un pan de fixation résultant de l'assemblage et du collage des extrémités 7.1 et 7.2. On peut par exemple prévoir d'agrafer le pan de fixation sur la paroi. Si un tel panneau doit être recouvert par une couche de mortier, on prévoit de recouvrir la face 3.4 du panneau isolant 3 d'un matériau compatible avec les mortiers, comme par exemple une feuille de tissu de fibre de verre adaptée.

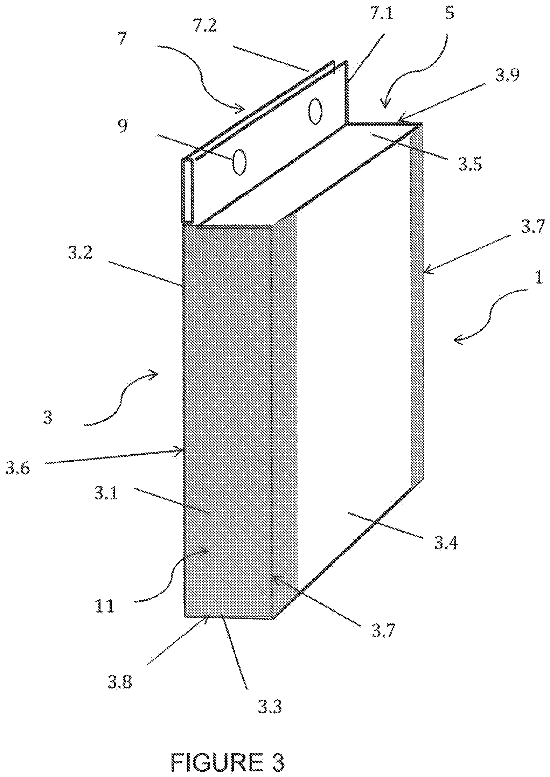

Sur la figure 3 est représentée une variante de l'invention dans laquelle le panneau 3 est enveloppé dans une bande 5.1 suivant un arrangement similaire à celui de la figure 1. Les deux faces latérales minces 3.1 du panneau 3 sont recouvertes d'une bande de renforcement 11 qui peut par exemple être constituée d'un tissu encollé. La bande de renforcement 11 dépasse sur les faces latérales larges arrière 3 .2 et avant 3.4 de façon à protéger les arrêtes angulaires 3.6 et 3.7 entre les faces 3.2 et 3.1, 3.4 et 3.1. Selon une variante non représentée, la bande de renforcement pourrait également être prolongée pour protéger les arrêtes angulaires inférieure 3.8 et supérieure 3.9 de chacune des faces latérales minces 3.1. La bande de renforcement réduit les risques d'endommagement des panneaux enveloppés 1 lors de leur manipulation, sur chantier notamment.

Le panneau enveloppé 1 représenté sur la figure 4 se distingue de ceux des figures 1, 2 et 3 en ce que le panneau isolant 3 (non visible) comporte une enveloppe barrière souple 5 dont il est totalement recouvert. L'enveloppe 5 est constituée de façon connue d'un film thermosoudable qui comporte plusieurs couches de matériaux distincts. Par exemple la couche interne peut être en matériau thermoplastique de façon à permettre le thermosoudage. L'enveloppe 5 peut comporter au moins une couche métallique, interne, et elle peut comporter une couche externe en fibre de verre de façon à être compatible avec les compositions de mortier. D'une façon générale, l'enveloppe 5 selon cette variante de l'invention doit satisfaire les exigences des enveloppes de PIV : étanchéité aux gaz, thermosoudabilité, et elle doit répondre aux exigences propres à l'invention : résistance mécanique. Le cas échéant cette résistance mécanique est apportée par la couche externe en fibres de verre, particulièrement en tissu de fibres de verre.

L'enveloppe 5 est ici thermosoudée sur trois côtés du panneau (ici le long des deux faces minces latérales et de la face supérieure au niveau de la ligne de pliure 21 comme expliqué ci-dessous). De façon nouvelle, l'enveloppe 5 se prolonge par deux pans 7.1 et 7.2. Les pans 7.1 et 7.2 sont thermosoudés le long de la ligne de pliure 21. Ils peuvent être thermosoudés sur toute leur surface ou seulement sur leur périmètre, de façon à former un pan d'accrochage 7, qui peut, de façon facultative, être percé d'orifices 9, éventuellement renforcés par des oeillets 9.1. Outre le thermosoudage le long de la ligne 21, les pans 7.1 et 7.2 peuvent être simplement collés pour former le pan d'accrochage 7. Eventuellement, un renfort de toute la surface des pans 7.1 et 7.2 peut être apporté par au moins une bande de renfort laminée ou collée, telle qu'en tissu de fibres de verre.

Le panneau enveloppé 1 est fabriqué en mettant en oeuvre les mêmes moyens que ceux connus pour la fabrication des panneaux PIV. Sa fabrication comporte en outre la formation du pan d'accrochage 7.

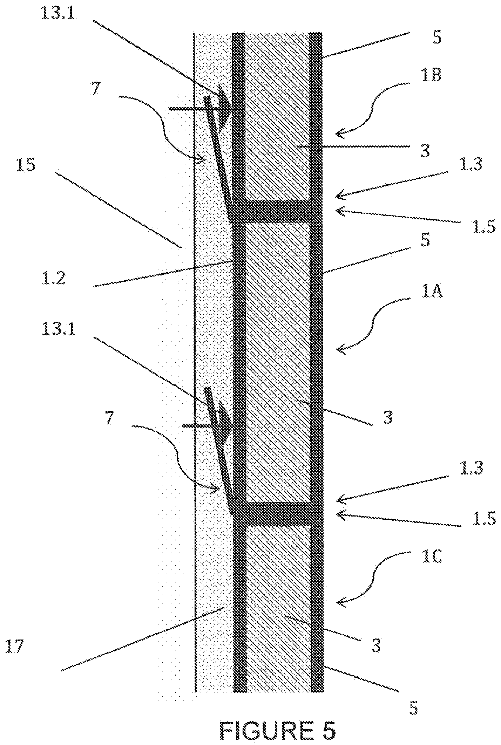

Sur la figure 5 on observe une vue en coupe partielle de trois panneaux isolants 3 superposés assurant le doublage d'une paroi 15 d'un bâtiment, fixés sur cette paroi 15 au moyen de bandes de fixation 5 du même type que celles représentées sur les figures 1, 2, 3 et 4. Le panneau enveloppé du milieu 1A est fixé sur la paroi 15 à l'aide d'un rivet 13.1 qui traverse un orifice 9 (non représenté sur cette figure) dans le pan de fixation 7. De façon alternative, la fixation du pan 7 à la paroi 15 pourrait être réalisée à l'aide d'un clou, d'une vis, d'une agrafe ou de tout autre moyen connu de l'homme du métier, sur un pan non nécessairement pourvu d'orifices 9. Une fixation à l'aide des mêmes moyens permet l'accrochage du panneau enveloppé inférieur 1C. Une couche de colle 17 permet l'adhésion de la partie de la bande 5 couvrant la face arrière 1.2 du panneau enveloppé 1 sur la paroi 15. Le panneau enveloppé supérieur 1B est placé de façon à ce que sa face inférieure 1.3 soit au regard de la face supérieure 1.5 du premier panneau 1A et à ce que les deux faces 1.3 et 1.5 des deux panneaux enveloppés 1A et 1B soient jointives. Le même arrangement est prévu entre les panneaux du milieu 1A et inférieur 1C. La couche de colle 17 est d'une épaisseur adaptée pour compenser le décalage occasionné par le recouvrement de la fixation 13.1 et du pan de fixation 7 par le panneau enveloppé qui est directement au dessus 1A, 1B. Cette couche de colle permet en outre le maintien du panneau pendant la pose avant la fixation du pan d'accrochage 7. Elle compense les irrégularités de surface de la paroi 15. Elle peut être déposée sur tout ou partie de la surface arrière du panneau ou de la surface du mur sur laquelle sera déposée la face arrière du panneau.

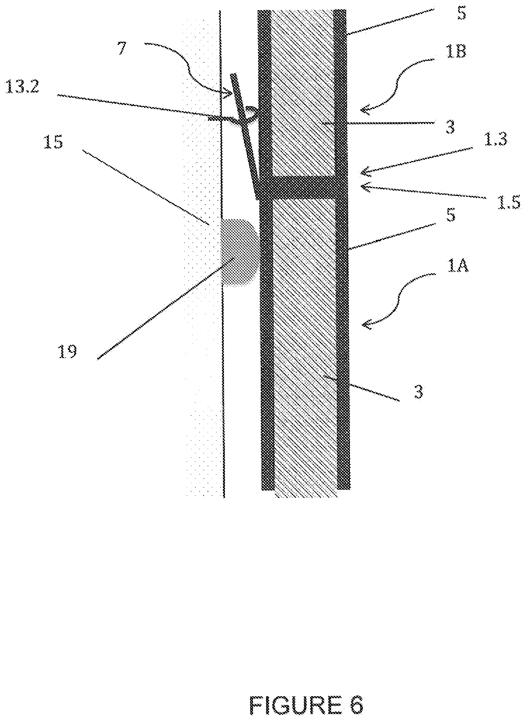

Sur la figure 6 est représentée schématiquement une vue en coupe partielle de deux éléments 3 de doublage d'une paroi 15 d'un bâtiment suivant un mode de fixation similaire à celui de la figure 5. Au lieu d'un rivet, un crochet 13.2 a été fixé dans la paroi et permet l'accrochage du pan de fixation 7 à la paroi 15 au travers d'un oeillet 9 (non représenté sur cette figure). Le décalage du au recouvrement entre un panneau enveloppé 1B et le pan d'accrochage 7 du panneau 1A immédiatement inférieur est compensé à l'aide d'un plot 19. Ainsi, chaque panneau isolant enveloppé 1A, 1B est disposé de façon sensiblement verticale. De façon alternative une barre de dimensions lui permettant de jouer le rôle de cale pourrait être mise en oeuvre à la place des plots.

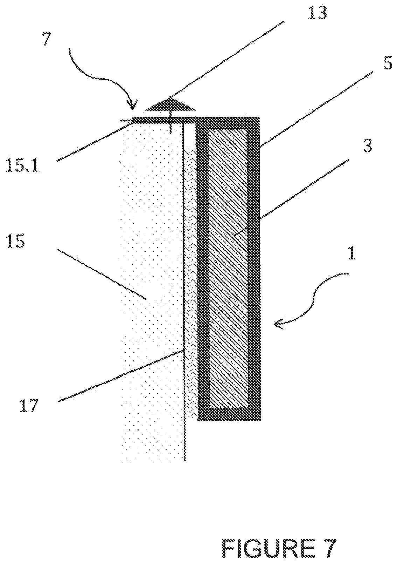

La figure 7 représente un exemple de fixation d'un panneau isolant enveloppé 1 au sommet d'un mur 15 comprenant une face supérieure 15.1. Le panneau 7 est rabattu sur la face supérieure 15.1 du mur 15. Selon cette variante, une fixation au moyen des pans de fixation 7 est possible sur la totalité d'une paroi 15. Ainsi, le mur 15 peut être couvert sur toute sa hauteur par des panneaux isolants enveloppés 1 selon l'invention. Pour cela, il faut que le mur soit d'une dimension verticale correspondant à un nombre entier de panneaux ou que l'un des panneaux soit réalisé sur-mesure ou alors compléter sur la hauteur correspondant à un panneau non entier par un isolant découpable (laine minérale, EPS, PUR, PIR, etc..)

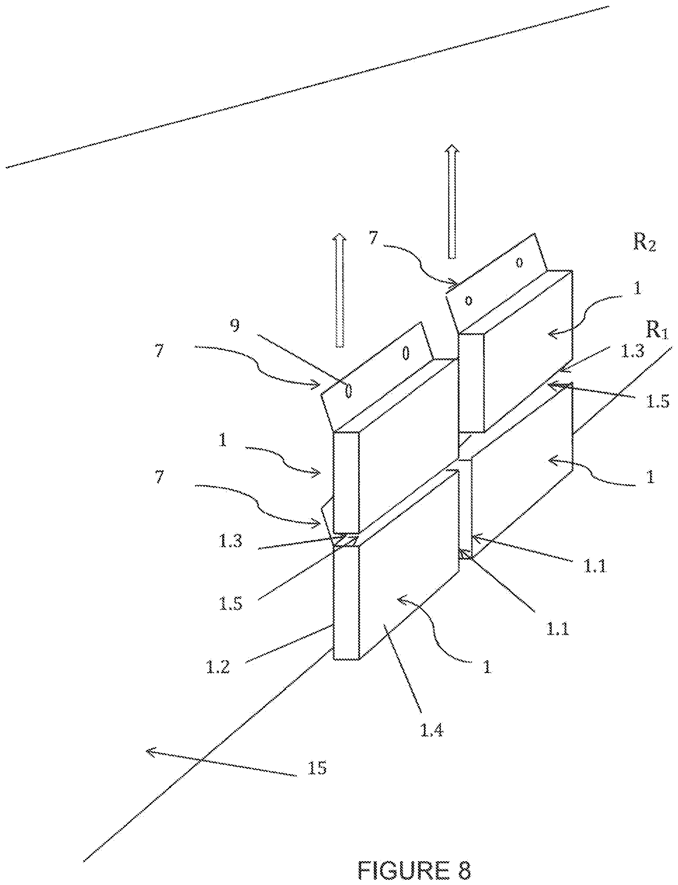

La figure 8 représente un système de doublage d'une paroi 15 d'un bâtiment comprenant : des panneaux isolants enveloppés 1 similaires à ceux qui ont été décrits ci-dessus, ces panneaux formant des rangées R1 et R2. Chaque panneau isolant enveloppé 1 présente une face interne 1.2 placée au regard de la paroi 15 et une face externe 1.4 opposée à la face interne 1.2, le pan d'accrochage 7 de chaque panneau 1 est fixé à la paroi 15 à l'aide de moyens tels que ceux qui ont été décrits ci-dessous : crochets, rivets, clous, vis, agrafe, colle...,. Des plots ou d'autres types de cales comme sur la figure 6 peuvent être prévus pour permettre une fixation verticale des panneaux enveloppés 1.

Les panneaux enveloppés 1 sont disposés de telle sorte que chaque panneau 1 d'une rangée supérieure recouvre le pan d'accrochage 7 du panneau 1 qui lui est immédiatement inférieur, la face inférieure 1.3 du panneau 1 supérieur étant assemblée de façon jointive avec la face supérieure 1.5 du panneau 1 inférieur. De même les faces latérales 1.1 de chaque panneau 1 sont placées de façon jointive vis-à-vis des faces latérales 1.1 des panneaux voisins. Les flèches indiquent que la construction de l'isolation du mur se fait du bas vers le haut. De façon connue, les extrémités de paroi (angles, ouvertures, plafonds) peuvent être isolées avec des panneaux PIV réalisés sur mesure, ou avec des panneaux isolants en un autre matériau et qui peuvent être découpés ou transpercés sans dégrader leurs propriétés isolantes, tels que des panneaux en laine de verre ou en laine de roche. Si le mur 15 est surmonté d'un plafond, la partie supérieure du mur, correspondant à la dernière rangée d'isolant est également réalisée avec des panneaux isolants en un autre matériau et qui peuvent être découpés ou transpercés sans dégrader leurs propriétés isolantes. Si le mur comporte une extrémité supérieure libre, on peut prévoir de fixer la dernière rangée au moyen d'un système tel que décrit sur la figure 7.

Sur la figure 9 sont représentés deux panneaux isolants enveloppés 1A, 1B composés chacun d'un panneau isolant 3, par exemple de type PIV, d'un doublage par une plaque de mousse compressible 21.1 et d'une bande de fixation 5. La plaque de mousse 21.1 présente la forme d'une plaque rectangulaire de dimensions permettant de couvrir la face arrière 3.2 du panneau 3 qui est parallèle à la paroi 15 et face à la paroi 15. L'ensemble composé du panneau 3 et de la plaque de mousse 21.1 est enveloppé par une bande de fixation 5. Sur cette figure, la bande de fixation 5 est représentée par un trait fin de façon à mieux faire ressortir la fonction de la plaque de mousse 21.1. Cette dernière est d'une épaisseur *e* qui permet que les panneaux isolants enveloppés 1A, 1B soient positionnés en appui contre la paroi 15. Les accroches 13.3 (clous ou vis par exemples) sont insérées dans l'épaisseur de la mousse 21.1 qui se déforme sous la pression exercée lors de la pose du panneau. La couche de mousse 21.1 épouse les petites imperfections du mur 15. L'épaisseur *e* de la plaque de mousse 21.1 par rapport à l'épaisseur du panneau isolant 3 est plus importante sur la figure 9 que dans la réalité, de façon à mieux illustrer sa fonction.

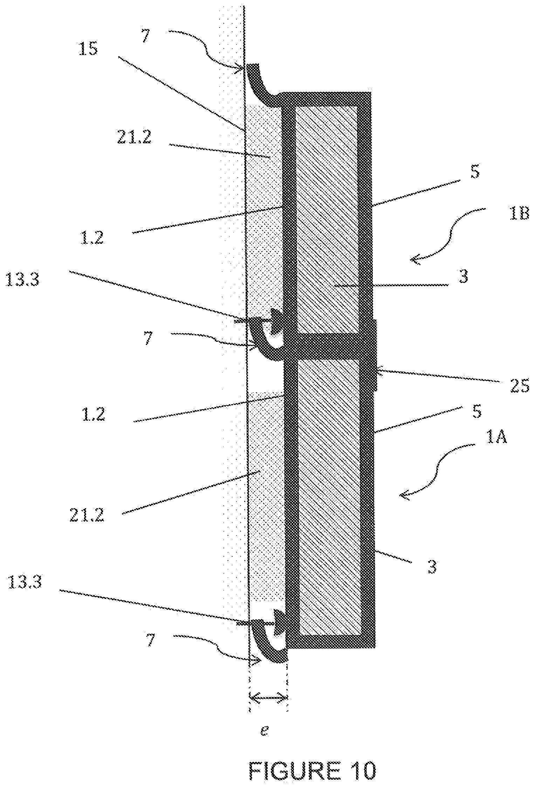

Une couche de colle 23 entre les panneaux 1A et 1B permet de solidariser les deux panneaux. De façon alternative, un adhésif double face peut remplir la même fonction. On peut également prévoir de positionner un adhésif à la jonction entre les panneaux 1A et 1B, comme illustré sur la figure 10.

D'une manière générale un panneau 3 de type PIV présente une épaisseur d'environ 10 à 50 mm. La plaque de mousse compressible 21.1 est avantageusement d'une épaisseur de quelques millimètres. Son épaisseur est choisie en fonction du type d'attache 13.3, de l'irrégularité de la paroi 15.

Sur la figure 10 sont représentés deux panneaux isolants enveloppés 1 composés chacun d'un panneau isolant 3, avantageusement de type PIV, et d'une bande de fixation 5. Une plaque de mousse compressible 21.2 est placée entre chaque panneau isolant enveloppé 1A, 1B et la paroi 15. La plaque de mousse compressible 21.2 présente la forme d'une plaque rectangulaire de dimensions permettant de couvrir tout ou partie de la face des panneaux 1A, 1B qui est parallèle à la paroi 15. La plaque de mousse 21.2 peut être collée ou non aux panneaux enveloppés 1A, 1B. La plaque de mousse 21.2 est d'une épaisseur *e* qui permet que les panneaux isolants enveloppés 1A, 1B soient positionnés en appui contre la paroi 15. Les accroches 13.3 (clous ou vis par exemples) sont insérées dans l'épaisseur de la mousse 21.2 qui se déforme sous la pression exercée lors de la pose (partie haute du système représenté), ou bien les accroches sont disposées à côté de la plaque dans un espace formant logement (partie basse du système représenté). La couche de mousse 21.2 épouse les petites imperfections du mur 15. La jonction entre les panneaux 1A et 1B est fermée au moyen d'un adhésif 25.

La figure 11A représente une variante d'un kit selon l'invention en cours d'assemblage : le panneau isolant 3 est entouré par un matériau d'enveloppe 5.1 qui comporte deux extrémités libres 7.1 et 7.2. Une bande adhésive double face 27 est placée en extrémité 7.2 de l'enveloppe 5.1. La bande adhésive double face 27 est d'une longueur *k* supérieure à la somme de *h* + *E, h* représentant la longueur de l'extrémité 7.2 et E représentant la largeur du panneau isolant 3. Ainsi, le repli de l'extrémité 7.2 et son rapprochement de l'extrémité 7.1 comme indiqué par les flèches, permet d'aboutir à un panneau isolant enveloppé 1 représenté sur la figure 11B : Le panneau isolant 3 est enveloppé par la bande de fixation 5, la bande de fixation 5 est fixée par l'adhésif 27 à la face supérieure 3.5 du panneau 3. Les deux extrémités 7.1 et 7.2 sont collées par l'adhésif 27 de façon à former le pan de fixation 7. L'ensemble forme un assemblage solidaire. De façon alternative, le même type de fixation pourrait être réalisé au moyen d'une couche de colle ou d'une attache de type bande autoaggripante.

Selon une variante représentée sur la figure 12, on peut ne coller que les parties supérieures des bandes de fixation 5 pour former un pan de fixation 7 ou même ne pas les coller du tout si les points de fixation 13.4 sont très proches du bord supérieur 1.5 du panneau 1. Cette disposition évite que la bande de fixation 5 ne se désolidarise du panneau 3 sous l'effet de son poids en suspension.

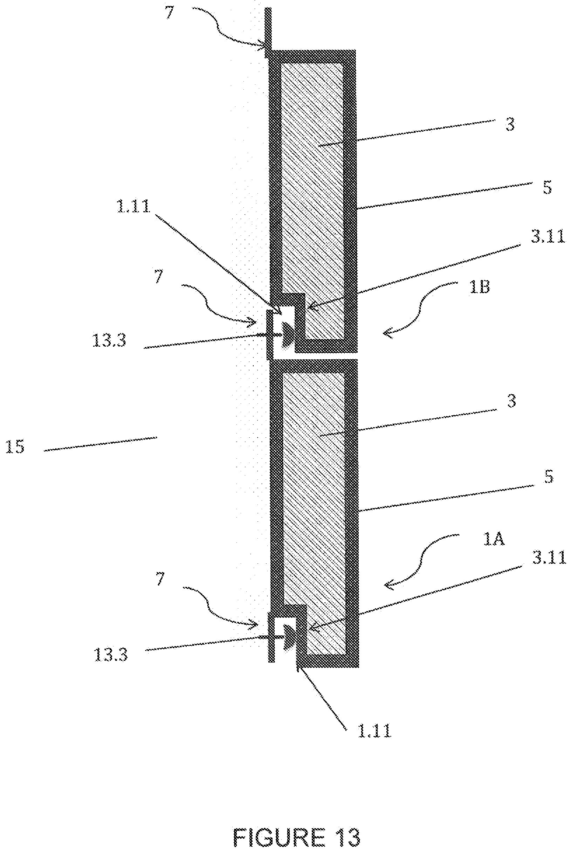

Selon la variante représentée sur la figure 13 les deux panneaux isolants enveloppés 1A et 1B sont composés chacun d'un panneau isolant 3 et d'une bande de fixation 5. Un décrochement 3.11 est aménagé dans le bas du panneau 3 et forme une cavité 1.11 dans les panneaux isolants enveloppés 1A, 1B. Cette cavité permet de loger l'accroche 13.3 du panneau immédiatement inférieur et donc d'assurer le parallélisme des panneaux 1A, 1B sur la paroi 15.

## Revendications

1. Panneau isolant enveloppé (1) comprenant
un panneau isolant sous vide (3) ayant une forme de plaque rectangulaire comprenant un matériau poreux résistant à la compression et une enveloppe barrière qui renferme de manière étanche aux gaz le matériau poreux,
ledit panneau isolant enveloppé (1) étant **caractérisé en ce qu'**il comprend
au moins une bande (5) de fixation présentant une largeur (*l*) et une longueur, la longueur étant supérieure au périmètre du panneau isolant sous vide (3), chaque bande de fixation (5) formant une enveloppe autour d'au moins une partie de quatre faces successives (3.2, 3.3, 3.4, 3.5) du panneau isolant sous vide (3) et comportant deux extrémités libres (7.1, 7.2) qui peuvent être assemblées pour former un pan d'accrochage (7), la ou chaque bande de fixation (5) étant assemblée solidairement sur le panneau isolant sous vide (3).

2. Panneau isolant enveloppé (1) selon la revendication 1 qui comporte en outre des moyens de fixation (9, 9.1) permettant la fixation mécanique du pan d'accrochage (7) à une paroi, notamment des perforations (9) dans le pan d'accrochage.

3. Panneau isolant enveloppé (1) selon l'une quelconque des revendications précédentes, dans lequel la bande de fixation (5) constitue l'enveloppe barrière et renferme de manière étanche aux gaz le matériau poreux.

4. Panneau isolant enveloppé (1) selon l'une quelconque des revendications précédentes, dans lequel la bande de fixation (5) est en fibres de verre ou à base de fibres de verre.

5. Panneau isolant enveloppé (1) selon l'une quelconque des revendications précédentes, dans lequel la bande de fixation (5) est fixée au panneau isolant sous vide (3) par collage ou par thermosoudage.

6. Panneau isolant enveloppé (1) selon l'une quelconque des revendications précédentes, dans lequel la largeur (*l*) de la bande de fixation (5) est sensiblement égale à la largeur (L) du panneau isolant sous vide (3).

7. Panneau isolant enveloppé (1) selon l'une quelconque des revendications 1 à 5, comportant au moins deux bandes de fixation (5) ayant chacune une largeur (*l*) inférieure à la largeur (L) du panneau isolant sous vide (3).

8. Panneau isolant enveloppé (1) selon l'une quelconque des revendications 1 à 7, comprenant en outre une plaque de doublage, notamment une plaque de mousse compressible, enveloppée également par la bande de fixation.

9. Kit de montage d'un panneau isolant enveloppé (1) selon l'une quelconque des revendications 1 à 8, comprenant
- un panneau isolant sous vide (3) ayant une forme de plaque rectangulaire comprenant un matériau poreux résistant à la compression et une enveloppe barrière qui renferme de manière étanche aux gaz le matériau poreux, et
- au moins une bande (5) de fixation présentant une largeur (*l*) et une longueur, la longueur étant supérieure au périmètre du panneau isolant sous vide (3), chaque bande de fixation (5) étant adaptée pour former une enveloppe autour d'au moins une partie de quatre faces successives (3.2, 3.3, 3.4, 3.5) du panneau isolant sous vide (3) tout en conservant deux extrémités libres (7.1, 7.2) pouvant être assemblées de manière à former un pan d'accrochage (7).

10. Kit selon la revendication 9, comprenant en outre des moyens permettant l'assemblage solidaire de la bande de fixation sur le panneau isolant sous vide, pour former un panneau isolant enveloppé.

11. Procédé de doublage d'une paroi (15) d'un bâtiment avec des panneaux isolants enveloppés (1) selon l'une quelconque des revendications 1 à 8, ce procédé comportant les étapes suivantes :
- fixation du pan d'accrochage (7) d'un premier panneau isolant enveloppé (1) sur la paroi (15) à l'aide d'un moyen de fixation mécanique (9, 9.1, 13 .1, 13.2, 13.3, 13.4),
- fixation des pans d'accrochage (7) des autres panneaux (1) de façon à former un assemblage jointif de panneaux isolants (1), chaque panneau étant disposé de façon à recouvrir le pan de fixation (7) du panneau qui lui est immédiatement inférieur.

12. Procédé de doublage selon la revendication 11, comprenant en outre les étapes préalables suivantes :
- assemblage sur chaque panneau isolant sous vide (3) d'au moins une bande de fixation (5) de longueur supérieure au périmètre du panneau isolant sous vide (3), de manière à ce que ladite bande de fixation (5) forme une enveloppe autour d'au moins une partie de quatre faces successives (3.2, 3.3, 3.4, 3.5) du panneau isolant sous vide (3), de façon à conserver deux extrémités libres (7.1, 7.2) en extrémité de la bande, et
- assemblage des extrémités de la bande (7.1, 7.2) pour former un pan d'accrochage (7) de façon à former un panneau isolant enveloppé (1).

13. Procédé de doublage selon la revendication 11 ou 12, dans lequel chaque panneau isolant enveloppé (1) comporte une face interne (1.2) tournée vers la paroi (15) et une face externe (1.4) opposée à la face interne et les faces internes (1.2) des panneaux isolants enveloppés (1) sont éloignées de la paroi (15) et disposées de façon sensiblement verticale par l'intermédiaire d'une couche de colle et/ou au moyen de cale(s) ou d'une plaque de mousse compressible (19 ; 21.2).

14. Procédé de doublage selon l'une quelconque des revendications 11 à 13, dans lequel chaque panneau isolant enveloppé (1) comporte une face interne (1.2) tournée vers la paroi (15) et une face externe (1.4) opposée à la face interne, et le procédé comprend en outre l'application d'une couche de mortier sur les faces externes des panneaux isolants enveloppés assemblés.

15. Système de doublage d'une paroi d'un bâtiment comprenant une pluralité de panneaux isolants enveloppés selon l'une quelconque des revendications 1 à 8, et dans lequel
les panneaux isolants enveloppés sont répartis en au moins une couche de panneaux formant des rangées,
chaque panneau isolant enveloppé (1) comporte une face interne (1.2) tournée vers la paroi (15) et une face externe (1.4) opposée à la face interne,
le pan d'accrochage de chaque panneau isolant enveloppé est fixé à la paroi à l'aide de moyens mécaniques de fixation,
les panneaux sont disposés de telle sorte que chaque panneau d'une rangée supérieure recouvre le pan d'accrochage du panneau qui lui est immédiatement inférieur, la face inférieure (1.3) du panneau supérieur étant assemblée de façon jointive avec la face supérieure (1.5) du panneau inférieur.

## Patentansprüche

1. Umhüllte Isolierplatte (1), umfassend
eine Vakuumisolierplatte (3) mit einer rechteckigen Plattenform, die ein druckfestes poröses Material und eine Barrierehülle umfasst, die das poröse Material gasdicht umschließt,
wobei die umhüllte Isolierplatte (1) **dadurch gekennzeichnet ist, dass** sie mindestens einen Befestigungsstreifen (5) mit einer Breite (*l*) und einer Länge umfasst, wobei die Länge größer als der Umfang der Vakuumisolierplatte (3) ist, wobei jeder Befestigungsstreifen (5) eine Hülle um mindestens einen Teil von vier aufeinanderfolgenden Flächen (3.2, 3.3, 3.4, 3.5) der Vakuumisolierplatte (3) bildet und zwei freie Enden (7.1, 7.2) umfasst, die zu einem Aufhängeteil (7) montierbar sind, wobei der oder jeder Befestigungsstreifen (5) auf der Vakuumisolierplatte (3) fest montiert ist.

2. Umhüllte Isolierplatte (1) nach Anspruch 1, die ferner Befestigungseinrichtungen (9, 9.1) umfasst, die die mechanische Befestigung des Aufhängeteils (7) an einer Wand ermöglichen, insbesondere Perforationen (9) in dem Aufhängeteil.

3. Umhüllte Isolierplatte (1) nach einem der vorstehenden Ansprüche, wobei der Befestigungsstreifen (5) die Barrierehülle bildet und das poröse Material gasdicht umschließt.

4. Umhüllte Isolierplatte (1) nach einem der vorstehenden Ansprüche, wobei der Befestigungsstreifen (5) aus Glasfaser oder auf Glasfaserbasis ist.

5. Umhüllte Isolierplatte (1) nach einem der vorstehenden Ansprüche, wobei der Befestigungsstreifen (5) durch Kleben oder Heißverschweißen an der Vakuumisolierplatte (3) befestigt ist.

6. Umhüllte Isolierplatte (1) nach einem der vorstehenden Ansprüche, wobei die Breite (*l*) des Befestigungsstreifens (5) im Wesentlichen gleich der Breite (L) der Vakuumisolierplatte (3) ist.

7. Umhüllte Isolierplatte (1) nach einem der Ansprüche 1 bis 5, umfassend mindestens zwei Befestigungsstreifen (5) mit jeweils einer Breite (*l*), die kleiner als die Breite (L) der Vakuumisolierplatte (3) ist.

8. Umhüllte Isolierplatte (1) nach einem der Ansprüche 1 bis 7, ferner umfassend eine Verkleidungsplatte, insbesondere eine komprimierbare Schaumstoffplatte, die ebenfalls von dem Befestigungsstreifen umhüllt ist.

9. Bausatz zur Montage einer umhüllten Isolierplatte (1) nach einem der Ansprüche 1 bis 8, umfassend
- eine Vakuumisolierplatte (3) mit einer rechteckigen Plattenform, die ein druckfestes poröses Material und eine Barrierehülle umfasst, die das poröse Material gasdicht umschließt, und
- mindestens einen Befestigungsstreifen (5) mit einer Breite (*l*) und einer Länge, wobei die Länge größer als der Umfang der Vakuumisolierplatte (3) ist, wobei jeder Befestigungsstreifen (5) angepasst ist, um eine Hülle um mindestens einen Teil von vier aufeinanderfolgenden Flächen (3.2, 3.3, 3.4, 3.5) der Vakuumisolierplatte (3) zu bilden, wobei zwei freie Enden (7.1, 7.2) erhalten bleiben, die so montierbar sind, dass sie ein Aufhängeteil (7) bilden.

10. Bausatz nach Anspruch 9, ferner umfassend Einrichtungen zur festen Montage des Befestigungsstreifens auf der Vakuumisolierplatte, um eine umhüllte Isolierplatte zu bilden.

11. Verfahren zum Verkleiden einer Wand (15) eines Gebäudes mit umhüllten Isolierplatten (1) nach einem der Ansprüche 1 bis 8, wobei dieses Verfahren die folgenden Schritte umfasst:
- Befestigen des Aufhängeteils (7) einer ersten umhüllten Isolierplatte (1) an der Wand (15) mithilfe einer mechanischen Befestigungseinrichtung (9, 9.1, 13.1, 13.2, 13.3, 13.4),
- Befestigen der Aufhängeteilen (7) der anderen Platten (1) derart, dass eine anstoßende Montage von Isolierplatten (1) gebildet wird, wobei jede Platte so angeordnet ist, dass sie das Aufhängeteil (7) der Platte unmittelbar darunter abdeckt.

12. Verkleidungsverfahren nach Anspruch 11, ferner umfassend die folgenden vorherigen Schritte:
- Montieren, auf jeder Vakuumisolierplatte (3), mindestens eines Befestigungsstreifens (5) mit einer Länge, die größer als der Umfang der Vakuumisolierplatte (3) ist, sodass der Befestigungsstreifen (5) eine Hülle um mindestens einen Teil von vier aufeinanderfolgenden Flächen (3.2, 3.3, 3.4, 3.5) der Vakuumisolierplatte (3) bildet, um zwei freie Enden (7.1, 7.2) am Ende des Streifens zu behalten, und
- Montieren der Enden (7.1, 7.2) des Streifens, um ein Aufhängeteil (7) zu bilden, um eine umhüllte Isolierplatte (1) zu bilden.

13. Verkleidungsverfahren nach Anspruch 11 oder 12, wobei jede umhüllte Isolierplatte (1) eine der Wand (15) zugewandte Innenseite (1.2) und eine der Innenseite gegenüberliegende Außenseite (1.4) aufweist und die Innenseiten (1.2) der umhüllten Isolierplatten (1) von der Wand (15) beabstandet und durch eine Klebeschicht und/oder mittels Keil(en) oder einer komprimierbaren Schaumstoffplatte (19; 21.2) im Wesentlichen vertikal angeordnet sind.

14. Verkleidungsverfahren nach einem der Ansprüche 11 bis 13, wobei jede umhüllte Isolierplatte (1) eine der Wand (15) zugewandte Innenseite (1.2) und eine der Innenseite gegenüberliegende Außenseite (1.4) umfasst, und das Verfahren ferner das Aufbringen einer Mörtelschicht auf die Außenseiten der montierten umhüllten Isolierplatten umfasst.

15. System zum Verkleiden einer Wand eines Gebäudes, umfassend eine Vielzahl von umhüllten Isolierplatten nach einem der Ansprüche 1 bis 8, und wobei
die umhüllten Isolierplatten in mindestens einer Schicht von Platten verteilt sind, die Reihen bilden,
jede umhüllte Isolierplatte (1) eine der Wand (15) zugewandte Innenseite (1.2) und eine der Innenseite gegenüberliegende Außenseite (1.4) aufweist,
das Aufhängeteil jeder umhüllten Isolierplatte mithilfe von mechanischen Befestigungseinrichtungen an der Wand befestigt ist,
die Platten so angeordnet sind, dass jede Platte einer oberen Reihe das Aufhängeteil der Platte unmittelbar darunter abdeckt, wobei die Unterseite (1.3) der oberen Platte mit der Oberseite (1.5) der unteren Platte anstoßend montiert ist.

## Claims

1. An encased insulating panel (1) comprising
a vacuum insulation panel (3) in the form of a rectangular sheet comprising a compression-resistant porous material and a barrier envelope which in gastight manner encases the porous material,
said encased insulating panel (1) being **characterized in that** it comprises
at least one fixing strip (5) having a width (*l*) and a length, the length being greater than the perimeter of the vacuum insulation panel (3), each fixing strip (5) forming an envelope around at least part of four successive faces (3.2, 3.3, 3.4, 3.5) of the vacuum insulation panel (3) and comprising two free ends (7.1, 7.2) which can be joined together to form an attachment flap (7), the or each fixing strip (5) being assembled securely to the vacuum insulation panel (3).

2. The encased insulating panel (1) as claimed in claim 1, which further comprises fixing means (9, 9.1) allowing the attachment flap (7) to be fixed mechanically to a wall, notably perforations (9) in the attachment flap.

3. The encased insulating panel (1) as claimed in either one of the preceding claims, in which the fixing strip (5) constitutes the barrier envelope and in gastight manner encases the porous material.

4. The encased insulating panel (1) as claimed in any one of the preceding claims, in which the fixing strip (5) is made of fiberglass or based on fiberglass.

5. The encased insulating panel (1) as claimed in any one of the preceding claims, in which the fixing strip (5) is fixed to the vacuum insulation panel (3) by adhesive bonding or thermal bonding.

6. The encased insulating panel (1) as claimed in any one of the preceding claims, in which the width (*l*) of the fixing strip (5) is substantially equal to the width (L) of the vacuum insulation panel (3).

7. The encased insulating panel (1) as claimed in any one of claims 1 to 5, comprising at least two fixing strips (5) each having a width (*l*) less than the width (L) of the vacuum insulation panel (3).

8. The encased insulating panel (1) as claimed in any one of claims 1 to 7, further comprising a lining sheet, notably a sheet of compressible foam, likewise wrapped by the fixing strip.

9. A kit for mounting an encased insulating panel (1) as claimed in any one of claims 1 to 8, comprising
- a vacuum insulation panel (3) in the form of a rectangular sheet comprising a compression-resistant porous material and a barrier envelope which in gastight manner encases the porous material, and
- at least one fixing strip (5) having a width (*l*) and a length, the length being greater than the perimeter of the vacuum insulation panel (3), each fixing strip (5) being adapted for forming an envelope around at least part of four successive faces (3.2, 3.3, 3.4, 3.5) of the vacuum insulation panel (3) while keeping two free ends (7.1, 7.2) which can be joined together to form an attachment flap (7).

10. The kit as claimed in claim 9, further comprising means allowing the fixing strip to be assembled securely to the vacuum insulation panel to form an encased insulating panel.

11. A method for lining a wall (15) of a building with encased insulating panels (1) as claimed in any one of claims 1 to 8, this method comprising the following steps:
- fixing the attachment flap (7) of a first encased insulating panel (1) to the wall (15) using a mechanical fixing means (9, 9.1, 13.1, 13.2, 13.3, 13.4),
- fixing the attachment flaps (7) of the other panels (1) so as to form a contiguous assembly of insulating panels (1), each panel being arranged so that it covers the fixing flap (7) of the panel immediately below it.

12. The lining method as claimed in claim 11, further comprising the following preliminary steps:
- assembling onto each vacuum insulation panel (3) at least one fixing strip (5) of a length greater than the perimeter of the vacuum insulating panel (3), so that said fixing strip (5) forms an envelope around at least part of four successive faces (3.2, 3.3, 3.4, 3.5) of the vacuum insulation panel (3), so as to keep two free ends (7.1, 7.2) at the end of the strip, and
- bringing the ends of the strip (7.1, 7.2) together to form an attachment flap (7) so as to form an encased insulating panel (1).

13. The lining method as claimed in claim 11 or 12, in which each encased insulating panel (1) comprises an internal face (1.2) facing toward the wall (15) and an external face (1.4) opposite the internal face, and the internal faces (1.2) of the encased insulating panels (1) are held away from the wall (15) and arranged substantially vertically using a layer of adhesive and/or using spacer piece(s) or a sheet of compressible foam (19; 21.2).

14. The lining method as claimed in any one of claims 11 to 13, in which each encased insulating panel (1) comprises an internal face (1.2) facing toward the wall (15) and an external face (1.4) opposite the internal face, and the method further comprises the application of a layer of mortar to the external faces of the assembled encased insulating panels.

15. A system for lining a wall of a building comprising a plurality of encased insulating panels as claimed in any one of claims 1 to 8, and in which
the encased insulating panels are set out in at least one layer of panels forming rows,
each encased insulating panel (1) comprises an internal face (1.2) facing toward the wall (15) and an external face (1.4) opposite the internal face,
the attachment flap of each encased insulating panel is fixed to the wall using mechanical fixing means,
the panels are arranged in such a way that each panel of an upper row covers the attachment flap of the panel immediately below it, the lower face (1.3) of the upper panel being assembled contiguously with the upper face (1.5) of the lower panel.
